# EUROPEAN PATENT SPECIFICATION

(11) **EP 1 077 604 B1**
(45) Date of publication and mention of the grant of the patent: **26.11.2003**
(21) Application number: 99921099.0
(22) Date of filing: 07.05.1999
(51) Int. Cl.: A01M 3/00

(54) **AN INSECT CAPTURING DEVICE**
INSEKTENFANGVORRICHTUNG
DISPOSITIF DE CAPTURE D'INSECTES

(30) Priority: 12.05.1998 IE 980362; 31.08.1998 IE 980700
(43) Date of publication of application: 28.02.2001
(73) Proprietor: Allen, Anthony, Fermoy, County Cork (IE)
(72) Inventor: Allen, Anthony, Fermoy, County Cork (IE)
(74) Representative: O'Brien, John Augustine
(86) International application number: IE9900032
(87) International publication number: WO99057975

(56) References cited:
- US-A- 3 965 608
- US-A- 4 324 062
- US-A- 4 631 858
- US-A- 4 817 330
- US-A- 5 207 018
- US-A- 5 537 777
- US-A- 5 586 407

## Description

The invention relates to capture of insects so that they may be removed from a building and released alive outdoors.

Many people regard the presence of insects such as spiders inside a building as a nuisance. However, many such people do not wish to kill the insect and would prefer to have a convenient and simple way of disposing of the insect without killing it.

This problem has existed for many years and several attempts have been made at providing an insect capturing device to do the task. One type of such device is based on the principle of using suction to pull insects into a chamber. For example, in US Patent Specification No. 3965608 (Schuman) a hand-held suction device is described. A manually-operated piston pump creates a suction and a trigger-actuated shutter valve controls suction at a nozzle. Check valves may be included for strengthening a stored vacuum.

United States Patent Specification No. 4631858 (Kahle) describes a device which operates on a similar principle. The open end of a tube is held near an insect, and a piston is released to cause a vacuum so that the insect is drawn into the chamber.

United States Patent Specification No. 4817330 (Fahringer) also describes a device which operates on this principle. This device includes a bellows which creates a vacuum when it is squeezed. A conduit connects the bellows with a trap chamber and a screen is mounted in the conduit.

United States Patent Specification No. 5537777 (Geeting) describes a device having a handle with a compression chamber at one end. A soft head is attached at the end of a shaft. The soft head is drawn into a compression chamber so that it wraps around the insect as the head is being compressed.

The devices which operate on this principle appear to be quite complex and so therefore would be expensive and not amenable to widespread use. Another very important aspect is that the device appears to exert considerable force on an insect and parts of the devices such as screens in trap chambers would appear to at least injure the insect, if not kill it.

Another approach is based on the principle of controlling a trap door so that an insect is trapped within a chamber. For example, in United States Patent Specification No. 4324062 (Schneider) a tubular housing has a movable trap door at either end. One end is shaped for use in comers, and the other end is flat for use against walls etc. In United States Patent Specification No. US5207018 (Reaver) a device is described which comprises a flexible handle having a transparent rigid housing. The housing has a large aperture through which an insect is placed. A pair of parallel channels extend along opposite sides of the compartment aperture and they are arranged to support a front end of a mesh closure member.

These devices would appear to provide a lesser chance of injuring or killing the insect. However, it appears that they are difficult to operate and are complex.

There is therefore a need for an insect capturing device which is simpler to operate so that an insect is captured in a convenient manner and is not injured or killed.

There is also a need for such a device which is of simple and inexpensive construction.

According to the invention, there is provided an insect capturing device comprising a user handle and an insect capturing head, characterised in that,
the head comprises a plurality of bristles, and
the device comprises an actuator comprising means for causing the bristles to move to surround and capture an insect.

Thus, the invention provides for insect capturing in a simple and convenient manner, using components (namely bristles) which have been available for many years.

Preferably, the actuator comprises means for causing the bristles to converge.

In one embodiment, the bristles are arranged in a ring.

Preferably, the head comprises a plurality of tufts of bristles arranged in a ring.

In one embodiment, the bristles are arranged in two or more concentric rings.

Preferably, the bristles of an outer ring are longer than those of an inner ring.

In one embodiment, the rings each comprise a plurality of tufts of bristles, and the tufts of adjacent rings are mounted in a mutually offset configuration.

In another embodiment, the actuator comprises a diaphragm supporting the bristles and means for moving the diaphragm between a convex position at which the bristles (5) diverge and a convex position at which the bristles converge. This is a very simple and effective way of moving bristles to entrap an insect without killing it.

Preferably, said means for moving the diaphragm comprises a rod connected at one end to the diaphragm and at the other end to a trigger mechanism at the handle.

In one embodiment, the trigger mechanism comprises a front fixed handle part (10) and a rear trigger connected to the rod.

Preferably, the actuator further comprises a spring mounted to bias the bristles to a converged state.

In one embodiment, the handle is connected to the head by an elongate rod.

### Detailed Description of the Invention

The invention will be more clearly understood from the following description of some embodiments thereof, given by way of example only with reference to the accompanying drawings in which:-
Fig. 1 is a side view of an insect capturing device of the invention;
Fig. 2 is a more detailed perspective view showing part of a head of the device;
Fig. 3 is a front view of a diaphragm of the device;
Fig. 4 is a cross-sectional view in the direction of the arrows IV-IV of Fig. 3;
Fig 5 is a diagrammatic side view showing a handle of the device;
Fig. 6 is a diagrammatic side view showing an alternative construction of handle;
Figs. 7 and 8 are diagrammatic cross-sectional side views showing the head of the device in different positions;
Figs. 9(a) to 9(d) are a sequence of diagrams showing the manner in which an insect is captured; and
Fig. 10 is a perspective view showing the head of the device with a captured insect.

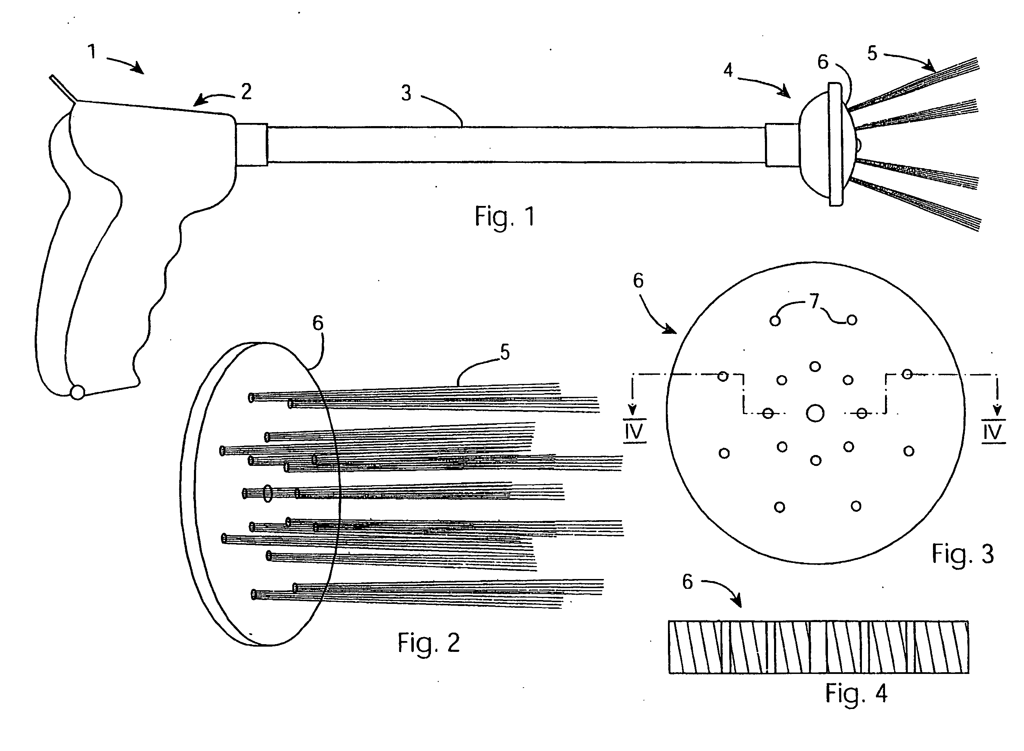

Referring to the drawings, and initially to Figs. 1 to 5 there is shown an insect capturing device 1 of the invention. The device 1 comprises a handle 2 connected to an elongate rod 3, the other end of which is connected to a head 4. The head 4 comprises tufts of bristles 5 extending from a diaphragm 6.

As shown in Figs. 2 and 3, the bristles 5 are arranged in two concentric rings in which the tufts are offset. Also, it will be apparent from Fig. 2 that the bristles of the outer ring are longer by approximately 8 mm than those of the inner ring. The length of the bristles in the inner ring is 92mm and the length of those in the outer ring is 100mm.

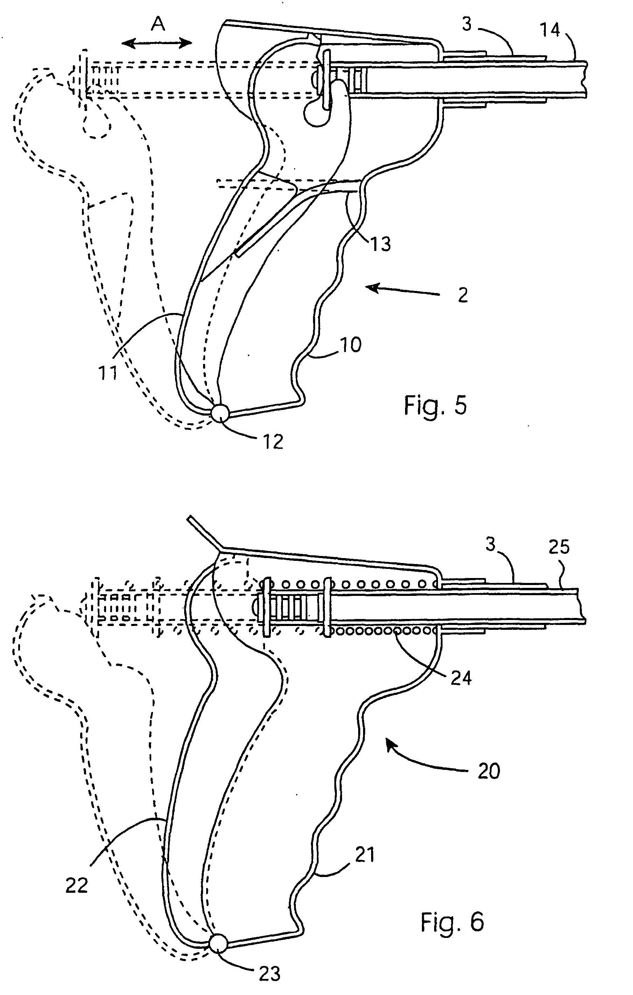

Referring particularly to Fig. 5, the handle 2 comprises a fixed handle part 10 which is pivotally connected to a trigger 11 by a pivot joint 12. The fixed handle part 10 comprises a leaf spring 30 against which the trigger 11 presses in an action indicated by the arrow A and the interrupted lines of Fig. 5. The trigger 11 presses against a rod 13 within the tube 3 against the action of the spring 13.

Referring to Fig. 6, an alternative construction of head, indicated generally by the numeral 20 is illustrated. In this embodiment, a fixed handle part 21 is connected to a trigger 22 at a pivot joint 23. The trigger 22 is biassed rearwardly by coil spring 24 around a rod 25. In the embodiments of both Figs. 5 and 6 the rod is urged rearwardly by the action of the relevant spring 13 or 24.

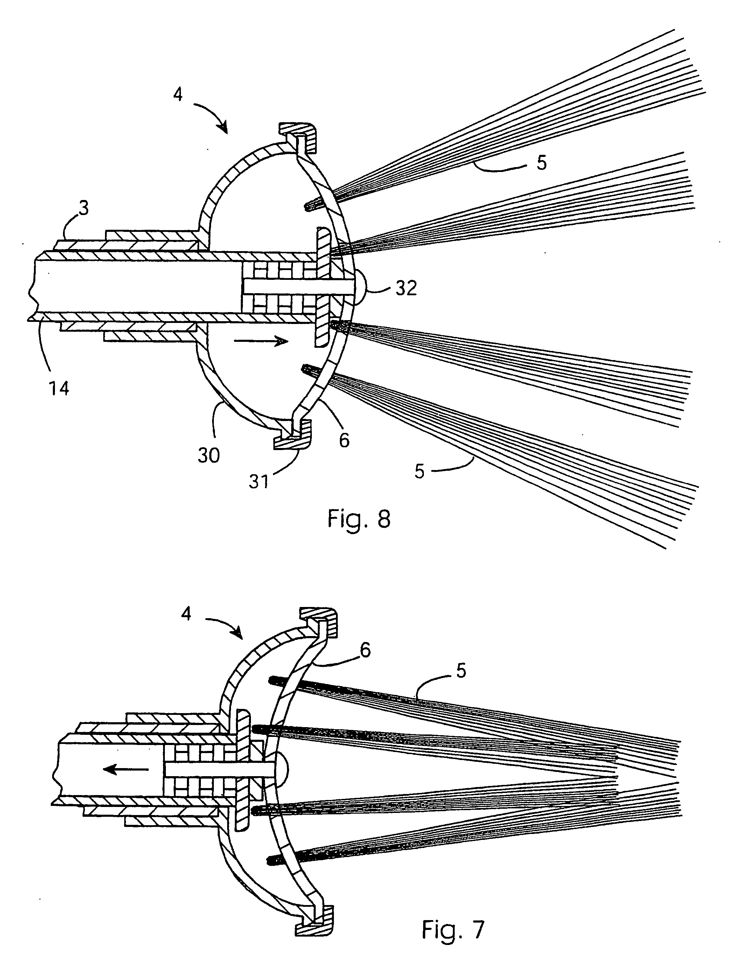

Referring now to Figs. 7 and 8, the manner in which movement of the bristles 5 is controlled is now described. Figs. 7 and 8 also illustrate the head 4 in more detail. It comprises a domed casing 13 and a sealing ring 13 of plastics material which supports the diaphragm 6. The rod 14 is connected to the diaphragm 6 by a fastener 32. The diaphragm 6 is flexible and its default position is shown in Fig. 7. This default position is caused by the action of the spring 13 which urges the trigger 11 and the rod 14 to a rear extremity shown by interrupted lines in Fig. 5. At this position, the diaphragm 6 is concave and the bristles 5 converge. The diaphragm 6 may be moved to a convex position when the user pushes the trigger 11 forwardly against the action of the spring 13.

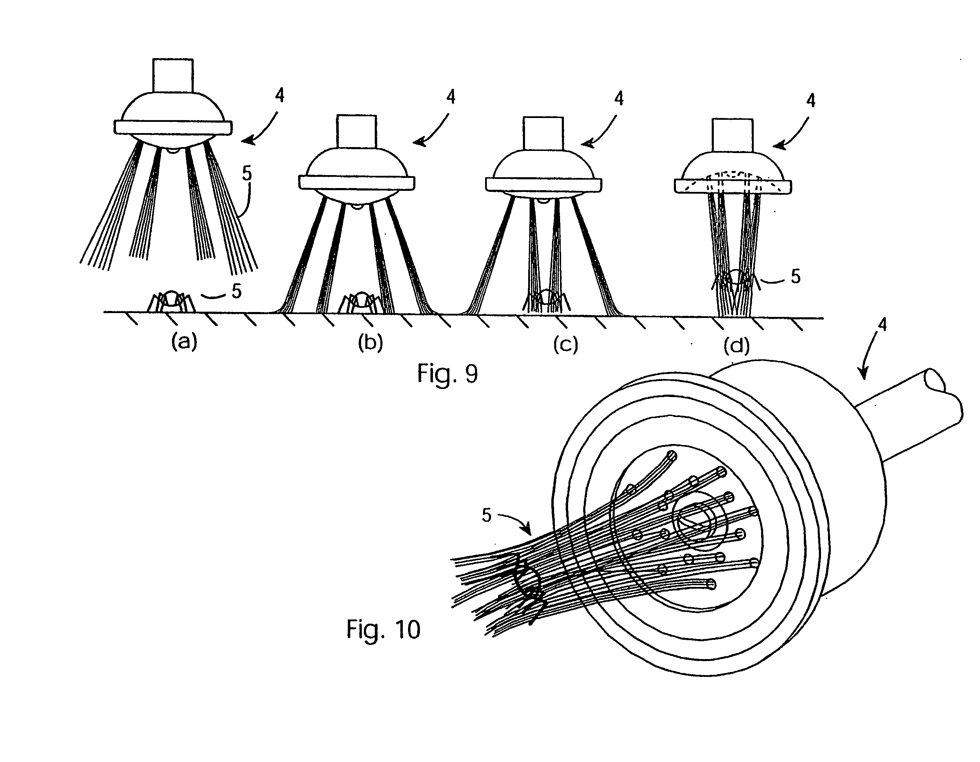

In operation, referring to Figs. 9 and 10, the user holds the device 1 at the handle 2 and presses the trigger11 forwardly against the action of the spring 13. This causes the bristles 5 to diverge, as shown in Figs. 8 and 9 (a). The head 4 is then moved so that the bristles 5 surround the insect (in this illustration a spider S) as shown in Fig. 9(b).

As shown in Fig. 9(c), the user then gradually releases pressure at the handle so that the spring 13 causes the rod 14 to move and therefore causes the diaphragm 6 to move towards the concave position. This causes the bristles 5 to converge. Because the bristles 5 press against the surface at which the spider S is located, the inner bristles are free to converge firstly, the outer bristles being held against the surface. Therefore, the inner bristles surround and grip the insect in a manner whereby the insect is trapped but is not injured. The inner bristles also tend to lift the spider S to some extent. Subsequently, as shown in Fig. 9(d), the outer bristles 5 converge to surround the spider S to provide a more comprehensive entrapment both around and below the spider S. The final position is shown most clearly in Fig. 10. It has been found that this action does not injure the insect. The bristles are strong enough to grip the insect but are resilient enough not to injure it.

The user then carries the device 1 outdoors and again presses the trigger 11. This causes the bristles 5 to diverge and thus release the insect harmlessly.

It will be appreciated that the invention provides an insect capturing device which is much simpler than has heretofore been the case. Importantly, the device uses simple components which have been available for many years. Therefore it may be produced using conventional production technologies.

Also, the device is much less likely to injure or kill an insect than the prior art devices. A still further advantage is that the device is much easier to operate. Only simple positioning and triggering actions are required. Another advantage is that the device may be easily used in a variety of locations such as in tight comers or on open surfaces.

The invention is not limited to the embodiments described, but may be varied in construction and detail within the scope of the claims. For example, different bristle configurations may be used which provide entrapment of the insect. Also, it is not essential that the bristles converge to capture an insect. For example, the bristles may move laterally on arcuate supports which move in a radial direction. However, the converging action is particularly effective.

## Claims

1. An insect capturing device comprising a user handle and an insect capturing head, **characterised in that**,
the head (4) comprises a plurality of bristles (5), and
the device comprises an actuator (11, 14, 6) comprising means for causing the bristles to move to surround and capture an insect.

2. A device as claimed in claim 1, wherein the actuator comprises means for causing the bristles to converge.

3. A device as claimed in claims 1 or 2, wherein the bristles (5) are arranged in a ring.

4. A device as claimed in claim 3, wherein the head comprises a plurality of tufts of bristles (5) arranged in a ring.

5. A device as claimed in claims 3 or 4, wherein the bristles (5) are arranged in two or more concentric rings.

6. A device as claimed in claim 5, wherein the bristles of an outer ring are longer than those of an inner ring.

7. A device as claimed in claims 5 or 6, wherein the rings each comprise a plurality of tufts of bristles, and the tufts of adjacent rings are mounted in a mutually offset configuration.

8. A device as claimed in claims 2 to 7, wherein the actuator comprises a diaphragm (6) supporting the bristles and means for moving the diaphragm between a convex position at which the bristles (5) diverge and a concave position at which the bristles converge.

9. A device as claimed in claim 8, wherein said means for moving the diaphragm comprises a rod (14) connected at one end to the diaphragm (6) and at the other end to a trigger mechanism (10, 11, 12, 13) at the handle (2).

10. A device as claimed in claim 9, wherein the trigger mechanism comprises a front fixed handle part (10) and a rear trigger (11) connected to the rod (14).

11. A device as claimed in any preceding claim, wherein the actuator further comprises a spring (13, 24) mounted to bias the bristles to a converged state.

12. A device as claimed in any preceding claim, wherein the handle (2) is connected to the head (4) by an elongate rod (3).

## Patentansprüche

1. Insektenfangvorrichtung mit einem Benutzergriff und einem Insektenfangkopf,
**dadurch gekennzeichnet,**
**dass** der Kopf (4) mehrere Borsten (5) umfasst und die Vorrichtung ein Stellorgan (11, 14, 6) mit Mitteln, die die Borsten so bewegen, dass diese ein Insekt umschließen und fangen, umfasst.

2. Vorrichtung nach Anspruch 1, bei der das Stellorgan Mittel, die bewirken, dass sich die Borsten einander nähern, umfasst.

3. Vorrichtung nach Anspruch 1 oder 2, bei der die Borsten (5) in einem Ring angeordnet sind.

4. Vorrichtung nach Anspruch 3, bei der der Kopf mehrere in einem Ring angeordnete Büschel aus Borsten (5) umfasst.

5. Vorrichtung nach Anspruch 3 oder 4, bei der die Borsten (5) in zwei oder mehr konzentrischen Ringen angeordnet sind.

6. Vorrichtung nach Anspruch 5, bei der die Borsten eines äußeren Rings länger sind als diejenigen eines inneren Rings.

7. Vorrichtung nach Anspruch 5 oder 6, bei der die Ringe jeweils mehrere Büschel aus Borsten umfassen und Büschel benachbarter Ringe gegeneinander versetzt angeordnet sind.

8. Vorrichtung nach Anspruch 2 bis 7, bei der das Stellorgan eine Membran (6), die die Borsten trägt, und Mittel, mit denen sich die Membran zwischen einer konvexen Position, bei der die Borsten (5) einander angenähert sind, und einer konkaven Position, bei der die Borsten voneinander entfernt sind, hin und her bewegen lässt, umfasst.

9. Vorrichtung nach Anspruch 8, bei der die Mittel zum Bewegen der Membran eine Stange (14), die an einem Ende mit der Membran (6) und am anderen Ende mit einem am Griff (2) angebrachten Auslösemechanismus (10, 11, 12, 13) verbunden ist, umfassen.

10. Vorrichtung nach Anspruch 9, bei der der Auslösemechanismus ein vom angeordnetes fixiertes Griffteil (10) und einen hinten angeordneten und mit der Stange (14) verbundenen Auslöser (11) umfasst.

11. Vorrichtung nach einem der vorhergehenden Ansprüche, bei der das Stellorgan weiterhin eine Feder (13, 24) umfasst, die so angebracht ist, dass sie die Borsten einander annähert.

12. Vorrichtung nach einem der vorhergehenden Ansprüche, bei der der Griff (2) über eine Rohrstange (3) mit dem Kopf (4) verbunden ist.

## Revendications

1. Dispositif piégeur d'insectes comprenant une poignée pour utilisateur et une tête piégeuse d'insectes, **caractérisé en ce que**,
la tête (4) comprend une pluralité de poils (5), et
le dispositif comprend un dispositif d'actionnement (11, 14, 6) comprenant des moyens destinés à déplacer les poils pour qu'ils entourent et capturent un insecte.

2. Dispositif selon la revendication 1, dans lequel le dispositif d'actionnement comprend des moyens pour faire converger les poils.

3. Dispositif selon les revendications 1 ou 2, dans lequel les poils (5) sont agencés en anneau.

4. Dispositif selon la revendication 3, dans lequel la tête comprend une pluralité de touffes de poils (5) agencées en anneau.

5. Dispositif selon les revendications 3 ou 4, dans lequel les poils (5) sont agencés en deux anneaux concentriques ou plus.

6. Dispositif selon la revendication 5, dans lequel les poils d'un anneau extérieur sont plus longs que ceux d'un anneau intérieur.

7. Dispositif selon les revendications 5 ou 6, dans lequel les anneaux comprennent chacun une pluralité de touffes de poils et les touffes des anneaux adjacents sont montées selon une configuration mutuellement décalée.

8. Dispositif selon les revendications 2 à 7, dans lequel le dispositif d'actionnement comprend un diaphragme (6) supportant les poils et des moyens pour déplacer le diaphragme entre une position convexe dans laquelle les poils (5) divergent et une position concave dans laquelle les poils convergent.

9. Dispositif selon la revendication 8, dans lequel lesdits moyens pour déplacer le diaphragme comprennent une tige (14) raccordée, à une extrémité, au diaphragme (6) et à l'autre extrémité, à un mécanisme de déclenchement (10, 11, 12, 13) au niveau de la poignée (2).

10. Dispositif selon la revendication 9, dans lequel le mécanisme de déclenchement comprend une partie de poignée fixe avant (10) et une gâchette arrière (11) raccordées à la tige (14).

11. Dispositif selon l'une quelconque des revendications précédentes, dans lequel le dispositif d'actionnement comprend en outre un ressort (13, 24) monté pour solliciter les poils de manière à les amener dans un état de convergence.

12. Dispositif selon l'une quelconque des revendications précédentes, dans lequel la poignée (2) est raccordée à la tête (4) par une tige allongée (3).
